(19) 

**Europäisches Patentamt**

**European Patent Office**

**Office européen des brevets**

(11) **EP 4 506 471 A1**

(12) **EUROPEAN PATENT APPLICATION**

published in accordance with Art. 153(4) EPC

(43) Date of publication:
**12.02.2025  Bulletin 2025/07**

(21) Application number: **23784756.1**

(22) Date of filing: **04.04.2023**

(51) International Patent Classification (IPC):
*C21D 8/12* (2006.01)       *C22C 38/00* (2006.01)
*C22C 38/06* (2006.01)      *B23K 26/073* (2006.01)
*B23K 26/364* (2014.01)    *H01F 1/147* (2006.01)

(52) Cooperative Patent Classification (CPC):
**B23K 26/073; B23K 26/364; C21D 8/12;
C22C 38/00; H01F 1/147;** C22C 38/06

(86) International application number:
**PCT/JP2023/013949**

(87) International publication number:
**WO 2023/195470 (12.10.2023 Gazette 2023/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **04.04.2022   JP 2022062619**

(71) Applicant: **NIPPON STEEL CORPORATION
Chiyoda-ku
Tokyo 100-8071 (JP)**

(72) Inventors:
• **YASUDA, Masato**
 **Tokyo 100-8071 (JP)**
• **HAMAMURA, Hideyuki**
 **Tokyo 100-8071 (JP)**
• **MORISHIGE, Nobusato**
 **Tokyo 100-8071 (JP)**
• **TAKAHASHI, Masaru**
 **Tokyo 100-8071 (JP)**
• **SUGIYAMA, Kimihiko**
 **Tokyo 100-8071 (JP)**

(74) Representative: **Vossius & Partner
Patentanwälte Rechtsanwälte mbB
Siebertstrasse 3
81675 München (DE)**

(54) **ORIENTED ELECTROMAGNETIC STEEL SHEET AND METHOD FOR PRODUCING SAME**

(57)     The present invention has as its object to provide grain-oriented electrical steel sheet better improved in core loss in control of magnetic domains for forming laser grooves in cold rolled steel sheet. The present invention provides grain-oriented electrical steel sheet meeting the following requirements for achieving the object:

That is, it provides grain-oriented electrical steel sheet comprising a base material steel sheet having a plurality of grooves on its surface and a glass coating on the surface of the base material steel sheet, in which grain-oriented electrical steel sheet, an absolute value of an angle θ formed by a direction perpendicular to a rolling direction and a sheet thickness direction of the base material steel sheet and a longitudinal direction of the grooves is 0 to 40°, a width W of the grooves is 20 $\mu$m to 300 $\mu$m, a depth D of the grooves is 10 $\mu$m to 40 $\mu$m, and a pitch P of the grooves in the rolling direction is 1.0 mm to 30.0 mm, and, at an inside of the glass coating directly under surfaces of the recessed parts of the grooves, one or more fine grains of a long axis of 1 $\mu$m or more and 20 $\mu$m or less are present in a cross-section perpendicular to the longitudinal direction of the grooves.

F i g. 4

**Description**

FIELD

The present invention relates to grain-oriented electrical steel sheet.

BACKGROUND

Grain-oriented electrical steel sheet is steel sheet controlled in crystal orientation by a combination of cold rolling treatment and annealing treatment so that the easy magnetization axes of the crystal grains and the rolling direction match.
As art for reducing eddy current loss, one type of core loss of grain-oriented electrical steel sheet, it is known to form an insulating coating on the surface of the base material steel sheet controlled in crystal orientation. The insulating coating acts to impart not only an electrical insulation property, but also tension, rust proofness, etc. to the base material steel sheet.
Further, as another method for reducing the eddy current loss, the method of magnetic domain control which forms distortion areas or grooves formed in a direction intersecting the rolling direction at a predetermined pitch along the rolling direction so as to reduce the width of 180° magnetic domains (refining of 180°magnetic domains) is known. The method of magnetic domain control is classified as methods which impart strain to the base material steel sheet of the grain-oriented electrical steel sheet and methods which form grooves in the surface of the base material steel sheet with coatings which apply tension to the base material steel sheet.
Grain-oriented electrical steel sheet controlled in magnetic domains by grooves can be used to produce an iron core (winding core) of a transformer. Even if performing stress relief annealing, the grooves do not disappear, so it is possible to maintain the effect of magnetic domain refining. For this reason, for winding cores, the method of magnetic domain control by formation of grooves is employed as a method for reducing the eddy current loss.

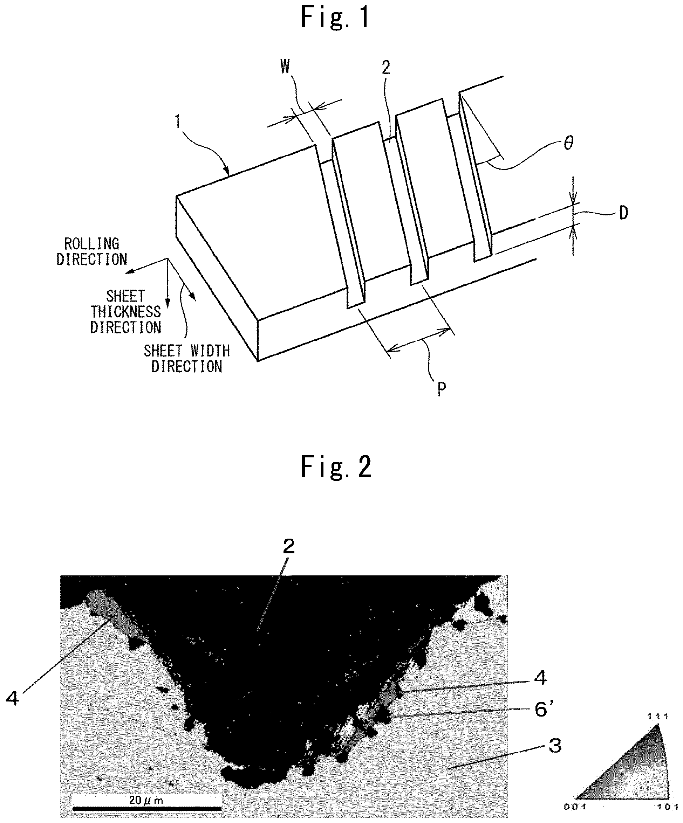

FIG. 1 is a view schematically showing an electrical steel sheet formed with grooves. FIG. 1 shows the state where the surface of a base material steel sheet 1 is formed with a plurality of grooves 2 at a pitch in the rolling direction of the base material steel sheet 1. In FIG. 1, $\theta$ shows an angle formed by the direction perpendicular to the rolling direction and the sheet thickness direction of the base material steel sheet (sheet width direction) and the longitudinal direction of the grooves 2. W shows a width of the grooves 2, D shows a depth of the grooves 2, and P shows a pitch of the grooves 2 adjoining each other in the rolling direction.
Various methods have been proposed for forming grooves in electrical steel sheet. For example, PTL 1 discloses an electrolytic etching method for forming grooves in a steel sheet surface of grain-oriented electrical steel sheet by electrolytic etching. For example, PTL 2 discloses a gear press method for mechanically pressing a gear against the steel sheet surface of grain-oriented electrical steel sheet to thereby form grooves at the steel sheet surface.
However, the method using electrolytic etching requires a process of masking, etching, and mask removal. There is the problem that the process becomes more complicated compared with the mechanical method. The method using gear pressing results in wear of the tooth profile in a short time since electrical steel sheet is high in hardness. Furthermore, from the viewpoint of high speed processing, it is difficult to realize a line speed of 100 mpm or more demanded from a general ferrous metal production process.
Further, for example PTL 3 discloses a lasering method of using a laser to melt and evaporate parts struck by the laser at the steel sheet surface of grain-oriented electrical steel sheet. The lasering method is free of the problems of wear of the tooth profile and complication of the process and enables high speed processing.
In the lasering method as well, several processes for formation of grooves have been disclosed. For example, PTL 4 proposes forming grooves in cold rolled steel sheet by the lasering method but if lasering cold rolled steel sheet, in the final product, a glass coating comprised of forsterite is formed at the bottom of the grooves. The glass coating is comprised of nonmagnetic oxides, so the magnetic flux density of the steel sheet falls and the resultant deterioration of the core loss becomes a problem.

[CITATIONS LIST]

[PATENT LITERATURE]

[PTL 1] Japanese Examined Patent Publication No. 62-54873
[PTL 2] Japanese Examined Patent Publication No. 62-53579
[PTL 3] Japanese Unexamined Patent Publication No. 2003-129135
[PTL 4] WO2019/156127

[PTL 5] WO2011/007771

SUMMARY

[TECHNICAL PROBLEM]

The present invention was developed considering the above situation and has as its object the provision of grain-oriented electrical steel sheet better improved in core loss in control of magnetic domains for forming laser grooves in cold rolled steel sheet (grooves formed by laser).

[SOLUTION TO PROBLEM]

The inventors engaged in intensive studies for solving the above problem. In repeatedly studying the lasering conditions at the time of forming laser grooves, they discovered that the core loss is improved if fine grains are present at the inside of the glass coating formed at the groove surfaces. The present invention was made based on this discovery. Its gist is as follows:

[1] The grain-oriented electrical steel sheet according to one aspect of the present invention is provided with a base material steel sheet having a plurality of grooves on its surface and a glass coating on the surface of the base material steel sheet. An angle $\theta$ formed by a direction perpendicular to a rolling direction and a sheet thickness direction of the base material steel sheet and a longitudinal direction of the grooves is 0 to 40°, a width W of the grooves is 20 $\mu$m to 300 $\mu$m, a depth D of the grooves is 10 $\mu$m to 40 $\mu$m, and a pitch P of the grooves in the rolling direction is 1.0 mm to 30.0 mm. At an inside of the glass coating at surfaces of recessed parts of the grooves, one or more fine grains of a long axis of 1 $\mu$m or more and 20 $\mu$m or less are present in a cross-section perpendicular to the longitudinal direction of the grooves.
[2] The grain-oriented electrical steel sheet according to [1], in which grain-oriented electrical steel sheet, the crystal orientation of the fine grains differs by 5° or more from a Goss orientation of the crystal orientation of the adjacent base material steel sheet.
[3] A method of production of grain-oriented electrical steel sheet according to another aspect of the present invention is a method of production of the grain-oriented electrical steel sheet according to [1] or [2], which method of production of the grain-oriented electrical steel sheet includes a groove forming step of lasering the surface of the steel sheet to form grooves and, as a condition for lasering, a focused spot diameter dL of the laser in the rolling direction and a focused spot diameter dC in the sheet width direction satisfy formula (1):

$$0.010 \leq dL/dC \leq 1.000 \ldots \text{ formula (1)}$$

[ADVANTAGEOUS EFFECTS OF INVENTION]

According to the present invention, it is possible to sufficiently realize the effect of magnetic domain refining and possible to obtain grain-oriented electrical steel sheet with a good core loss.

BRIEF DESCRIPTION OF DRAWINGS

FIG. 1 is a schematic view showing one example of electrical steel sheet formed with grooves on its surface.
FIG. 2 is a view showing one example of an IPF map from an ND direction by SEM-EBSD of fine grains present in a glass coating at surfaces of the recessed parts of grooves.
FIG. 3 is a view showing one example of an SEM image by SEM-EBSD of fine grains present in a glass coating at surfaces of the recessed parts of grooves.
FIG. 4 is a schematic view showing one example of a cross-section of a glass coating at surfaces of the recessed parts of grooves.

DESCRIPTION OF EMBODIMENTS

The inventors engaged in repeated studies for realizing the effect of magnetic domain refining to the maximum extent whereupon they discovered that by forming fine grains in the glass coating at the surfaces of the recessed parts of the grooves, the effect of magnetic domain refining can be enjoyed to the maximum extent. Below, the constitution of the grain-oriented electrical steel sheet according to an embodiment of the present invention (below, referred to as the "present electrical steel sheet") will be explained.

The present electrical steel sheet is provided with a base material steel sheet having a plurality of grooves arranged in parallel at its surface and a glass coating formed at the surface of the base material steel sheet (see FIG. 1 to FIG. 4). In the present electrical steel sheet, the surface of the glass coating may also be formed with a tension coating (insulating coating). As shown in FIG. 1, at the surface of the base material steel sheet, a plurality of grooves are formed substantially in parallel so as to adjoin each other in the rolling direction of the base material steel sheet. The direction of the grooves (angle θ) and width W, depth D, and pitch P of the grooves are determined considering the core loss in the same way as ordinary grain-oriented electrical steel sheet.

<Angle θ Formed by Rolling Direction of Base Material Steel Sheet and Longitudinal Direction of Grooves>

If the angle θ formed by the direction perpendicular to the rolling direction and the sheet thickness direction of the base material steel sheet (sheet width direction) and the longitudinal direction of the grooves is too large, there is no effect of magnetic domain control and the effect of improvement of the core loss can no longer be obtained, so it is made 40° or less. The angle θ is preferably smaller and may be 35° or less, 30° or less, 25° or less, 20° or less, 15° or less, 10° or less, 8° or less, 6° or less, or 5° or less. The lower limit of the angle θ is 0°, that is, the longitudinal direction of the grooves, is when parallel to the sheet width direction. Note that, the direction of the angle θ is not an issue. This indicates the angle at the acute angle side in the angles formed by the longitudinal direction of the grooves and the sheet width direction. The surface of the base material steel sheet has a plurality of grooves arranged generally parallel, but the angle θ of each groove need only be in such a range.

<Groove Width W>

The "groove width W" indicates the width of the grooves at the surface of the base material steel sheet in the cross-section of the grooves (groove cross-section) at the plane vertical to the longitudinal direction of the grooves. Even if the groove width W is less than 20 μm or too narrow, the grooves do not become starting points of formation of magnetic poles, there is no effect of control of the magnetic domains, and a good core loss cannot be obtained. On the other hand, if the width becomes more than 300 μm or too wide, the grooves do not become starting points of formation of magnetic poles, there is no effect of control of the magnetic domains, and a good core loss cannot be obtained. For this reason, the groove width W should be made 20 μm or more and 300 μm or less. The lower limit of the groove width W may preferably be made 25 μm, 30 μm, or 35 μm. The upper limit of the groove width W may preferably be made 250 μm, 200 μm, 150 μm, 100 μm, or 80 μm.

<Groove Depth D>

If the groove depth D is less than 10 μm or too shallow, the grooves do not become starting points of formation of magnetic poles, there is no effect of control of the magnetic domains, and a good core loss cannot be obtained. On the other, if more than 40 μm or too deep, the effect of control of magnetic domains ends up reaching saturation, only the magnetic flux density remarkably falls, and therefore a good core loss cannot be obtained. For this reason, the groove depth D may be made 10 μm or more and 40 μm or less. The lower limit of the groove depth D may preferably be 11 μm, 12 μm, 13 μm, 14 μm, or 15 μm. The upper limit of the groove depth D may preferably be 38 μm, 36 μm, 34 μm, 32 μm, 30 μm, 28 μm, or 26 μm.

<Groove Pitch P>

The "groove pitch P" is the pitch of the center lines in the longitudinal direction of the adjoining grooves in the grooves arranged substantially in parallel at the base material steel sheet surface and indicates a distance of the base material steel sheet in the rolling direction. The "center lines of grooves" are lines parallel to the longitudinal direction of the grooves passing through the center points of the grooves at the base material steel sheet surface in the groove cross-section.

If the groove pitch P is less than 1 mm or too narrow, the effect of magnetic domain control becomes saturated and just the magnetic flux density remarkably falls, so a good core loss is not obtained. On the other hand, if it is more than 30 mm or too wide, the effect of magnetic domain control is not sufficiently obtained and a good core loss is not obtained. For this reason, the groove pitch P may be 1 mm or more and 30 mm or less. The groove pitch P need not be equal pitches, but the groove pitch P with the adjoining groove may be within this range. The lower limit of the groove pitch P is preferably 1.2 mm, 1.4 mm, 1.5 mm, 1.6 mm, 1.8 mm, or 2.0 mm. The upper limit of the groove pitch P is preferably 25 mm, 20 mm, 15 mm, 10 mm, 7 mm, or 5 mm.

<Fine Grains in Glass coating at Surfaces of Recessed Parts of Grooves>

The fine grains in the glass coating at the surfaces of the recessed parts of the grooves in the present electrical steel sheet will be explained next. FIG. 2 to FIG. 4 are cross-sectional views of the groove parts of the present electrical steel sheet. More specifically, they are views showing regions including the grooves at the cross-sections perpendicular to the longitudinal direction of the grooves.

In the present electrical steel sheet, control is performed so that fine grains are present inside the glass coating at the surfaces of the recessed parts of the grooves formed at the base material steel sheet surface. Specifically, as shown in FIG. 2, control is performed so that there are fine grains with a long axis of 1 $\mu$m or more and less than 20 $\mu$m inside the glass coating at the surfaces of the recessed parts of the grooves. Further, control is performed so that the crystal orientation of the fine grains differs by 5° or more from the crystal orientation of the base material, that is, the Goss orientation.

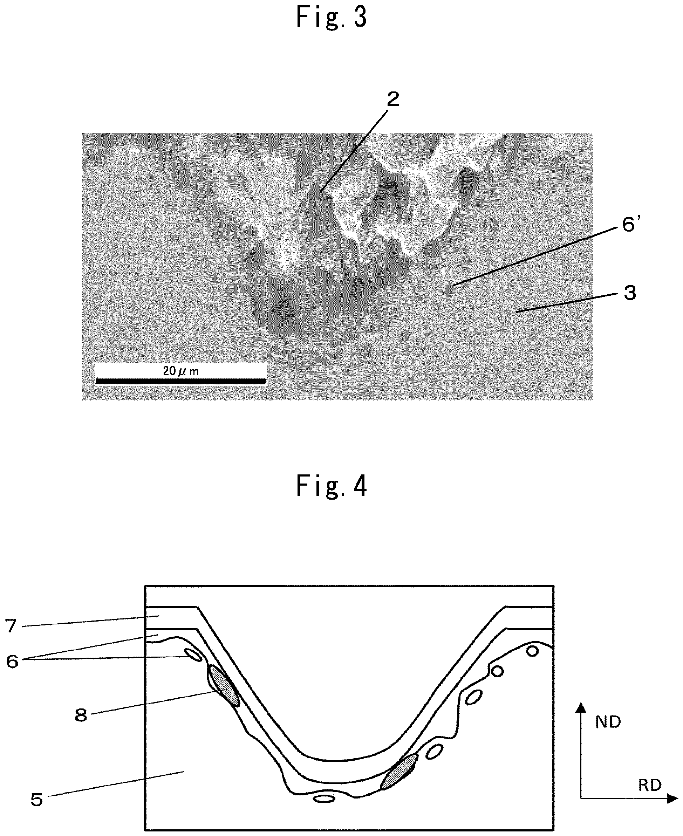

For observation of the fine grains of the glass coating at the surface of the recessed part of a groove, as shown in FIG. 2, a cross-section of the groove perpendicular to the longitudinal direction of the groove (groove cross-section) can be polished to a mirror surface and electrolytically polished to acquire an inverse pole figure (IPF) map (crystal orientation map) by an SEM-EBSD (electron backscattered diffraction pattern) to enable confirmation of the fine grains 4 in the glass coating 6. For measurement by the SEM and EBSD, known conditions can be applied. The measurement field and observed magnification and the EBSD measurement step may be suitably adjusted in accordance with the sizes of the groove and fine grains. In the IPF map of FIG. 2, if the interface of the glass coating 6 and the groove 2 is hard to confirm, for example, the interface can be confirmed by an SEM image of the same field. FIG. 3 shows an SEM image of the same field as FIG. 2. FIG. 4 schematically shows this groove cross-section. Note that, in FIG. 2 and FIG. 3, the island shaped black parts 6' in the base material 3 are parts of the glass coating. The glass coating itself is present as if rooted in the base material. The span of the interface between the line connecting the bottom surfaces of the glass coating (including parts appearing to be island shaped) and the grooves may be considered to be the glass coating without problem. As explained above, using the IPF map of the EBSD, it is possible to identify fine grains in the glass coating and further possible to confirm the crystal orientation of the fine grains and the Goss orientation of the base material.

The reason why the fine grains at the inside of the glass coating at the surfaces of the recessed parts of the grooves reduce the core loss is believed to be as follows: The magnetic domain refining at the grain-oriented electrical steel sheet is realized by the magnetic poles formed at the steel sheet surface causing the magnetostatic energy to rise and 180° domain walls newly forming to eliminate the same and thereby the magnetic domain width becoming narrower. If the magnetic domain width becomes narrower, the distance of movement of the domain walls when the steel sheet is magnetized becomes shorter and the energy loss at the time of movement of the domain walls is reduced, that is, the core loss is reduced. For this reason, magnetic domain refining requires formation of magnetic poles. It is necessary to create interfaces with a substance with a different magnetic permeability from steel sheet. It is believed that the fine grains at the inside of the glass coating at the surfaces of the recessed parts of the grooves act as starting points for formation of magnetic poles and promote magnetic domain refining to thereby reduce the core loss.

If the long axes of the fine grains at the inside of the glass coating at the surfaces of the recessed parts of the grooves become longer, there is a possibility of the magnetic properties ending up remarkably deteriorating, so the long axes of the fine grains should be 20 $\mu$m or less. Preferably, the upper limit of the long axes of the fine grains may be 19 $\mu$m, 18 $\mu$m, 17 $\mu$m, 16 $\mu$m, 15 $\mu$m, 14 $\mu$m, 13 $\mu$m, 12 $\mu$m, 11 $\mu$m, 10 $\mu$m, or 9 $\mu$m. The lower limit of the long axes of the fine grains is not particularly prescribed, but from the spatial resolution of an SEM-EBSD may be made 1 $\mu$m or more.

Further, the fine grains should be shapes flat with respect to the rolling direction. This is because it is believed that if the fine grains are flat in shape, formation of magnetic poles is efficiently realized. Therefore, each of the fine grains observed at the groove cross-section should have a ratio of the long axis (maximum length of fine grain: La) and the short axis (maximum length of fine grain in direction vertical to long axis: Lb) (aspect ratio=long axis length La/short axis length Lb) of larger than 1.0, preferably 1.1 or more, more preferably 1.2 or more.

If one or more fine grains are present in the glass coating at the surfaces of the recessed parts of the grooves, magnetic poles will be formed and the effect of magnetic domain refining will be obtained. Therefore, there is no need for the plurality of fine grains to be arranged in line shapes. If there is even one fine grain, excellent magnetic properties can be realized. It is sufficient that there be a starting point of formation of magnetic poles at each groove. There is no upper limit on the number of fine grains present at the glass coating at the surfaces of the recessed parts of the grooves. That is, it is believed that by precisely controlling the shapes of the grooves and the fine grains in the glass coating at the recessed parts of the grooves, it is possible to efficiently cause the formation of magnetic poles and obtain an excellent effect of magnetic domain refining.

The number of fine grains in the glass coating at the surfaces of the recessed parts of the grooves is obtained by selecting at least one of any groove from the surface of the electrical steel sheet, selecting 10 locations at any groove cross-section in the selected groove, examining the selected 10 locations of the groove cross-section by SEM-EBSD as explained above, and obtaining the average of the numbers of fine grains at the groove cross-sections at the 10 locations. That number should be 1.0 or more.

Further, in order for fine grains to become starting points for formation of magnetic poles, the difference in orientation of the fine grains in the glass coating at the surfaces of the recessed parts of the grooves from the crystal orientation of the adjoining base material, that is, the Goss orientation {110}<001> (below, sometimes referred to as the "base material Goss orientation") should be 5° or more. If the difference in orientation is less than 5°, the difference in orientation from the base material Goss orientation becomes too small and there is a possibility that the fine grains will not become starting points for formation of magnetic poles. Further, it is sufficient that they become starting points for formation of magnetic poles, so the upper limit of the difference in the crystal orientation of the fine grains and base material is not prescribed.

<Method of Production>

First, a known method is used to produce cold rolled steel sheet for the present electrical steel sheet. The composition of the steel sheet and the method of production of the cold rolled steel sheet are not particularly limited. A known method, for example, the composition of the steel sheet and the method of production described in PTL 5, can be employed.

However, the groove forming step forming grooves by lasering is preferably performed after the cold rolling and before the decarburization annealing step. The controllability of the shape of the grooves formed by the lasering is improved since the grooves are not cold rolled, but are decarburization annealed and finish annealed.

<Lasering Conditions>

The groove forming step will be explained. By lasering a cold rolled steel sheet, the steel sheet surface is formed with a plurality of grooves in a direction perpendicular to the rolling direction so that the groove width W, groove depth D, and predetermined pitch (groove pitch P) become the prescribed ranges. Among the lasering conditions, the type of the laser source, laser output, laser scan speed, and speed of movement of the steel sheet at the time of lasering are not particularly limited. Suitable conditions may be selected so that the groove width W, groove depth D, and predetermined pitch (groove pitch P) become the prescribed ranges.

[Laser Source]

As the laser source, for example, a fiber laser, YAG laser, semiconductor laser, $CO_2$ laser, or other high output laser generally used for industry can be used. If the grooves can be stably formed, a pulse laser or a continuous wave laser may also be used.

[Laser Output]

If the laser output is less than 200W, for forming the desired grooves, the laser scan speed remarkably falls and the industrial productivity falls, so the output should be made 200W or more. Preferably, it may be 1000W or more, more preferably 1500W or more. Further, if the laser output is more than 3000W, the required power source capacity becomes larger and the capital costs become tremendous, so this is not industrially practical, therefore the output should be made 3000W or less. Preferably, it should be 2800W or less, more preferably 2500W or less.

[Laser Scan Speed]

If the laser scan speed is a slow one of less than 5 m/s, it is necessary to slow the running speed of the steel sheet, so the speed is made 5 m/s or more. Preferably it is 20 m/s or more, more preferably 40 m/s or more. Further, if the laser scan speed is faster than 100 m/s, high output becomes correspondingly necessary and the capital costs increase, so the speed should be made 100 m/s or less. Preferably, it may be 80 m/s or less, more preferably 60 m/s or less.

[Shape of Laser Focused Spot]

The shape of the focused spot of the laser may be circular or oval somewhat broader in the sheet width direction at the base material steel sheet surface. To prevent the shape from becoming too broad, for example, the focused spot diameter: dL of the laser in the rolling direction and the focused spot diameter: dC of the laser in the sheet width direction should satisfy the relation (1). For example, the focused spot diameter: dL of the laser in the rolling direction may be made 5

to 100 $\mu$m, the focused spot diameter: dC of the laser in the sheet width direction may be made 5 to 100 $\mu$m, the laser output may be made 200 to 3000W, and the laser scan speed V may be made 5 to 100 m/s.

$$0.010 \leq dL/dC \leq 1.000 \ldots (1)$$

If dL/dC is larger than 1.000, the laser spot becomes an oval shape long in the rolling direction. Control of the groove shape by the laser becomes difficult. If dL/dC is smaller than 0.010, the laser spot becomes an oval shape superlong in the sheet width direction. In this case as well, control of the shape of the laser grooves becomes difficult.

Furthermore, the inventors engaged in repeated experiments and discovered that dL/dC affects the thickness of the melt layer at the surfaces of the recessed parts of the grooves. More specifically, if, like in the present invention, the spot shape is a suitable oval shape in the steel sheet width, it was confirmed that the melt layer of the surfaces of the recessed parts of the grooves became suitably thicker. If the laser spot is made an oval shape suitably long in the sheet width direction, it is believed that when lasering continuously at a 40° or less angle with respect to the sheet width direction, the heat due to the lasering becomes easily transferred in the direction of groove formation and the controllability of the columnar crystals formed at the surfaces of the recessed parts of the grooves is improved.

The mechanism of formation of fine grains will be explained later, but the thickness of the melt layer greatly affects the formation of fine grains, so preferably the thickness is not formed too great. Furthermore, if the thickness of the melt layer becomes too great, in the decarburization annealing (primary annealing), not only does recrystallization occur from the base material, but also recrystallization occurs from inside the melt layer, so crystal grains are formed in an orientation different from the grains recrystallized from the base material. If there are many recrystallized crystals present in the melt layer, in the finish annealing (secondary annealing), the priority growth of the Goss orientation, the so-called "secondary recrystallization", is detrimentally affected and this leads to deterioration of the characteristics of the electrical steel sheet. For this reason, control is necessary so that the melt layer does not become too thick, that is, so that dL/dC does not become too small.

Therefore, the relation of formula (1) is preferably satisfied. The lower limit of dL/dC is made 0.01, but may preferably be 0.015, 0.020, 0.025, 0.030, 0.035, 0.040, 0.045, or 0.050. The upper limit of dL/dC is 1 (circular spot), but the shape of the laser spot should if possible to be an oval shape suitably long in the sheet width direction. Preferably, it is 0.980, 0.960, 0.940, 0.920, 0.900, 0.880, 0.860, 0.840, 0.820, 0.800, 0.750, 0.700, 0.650, 0.600, 0.550, or 0.500.

In the above-mentioned groove forming step, it is possible to form grooves in the lasered parts on the steel sheet and possible to control the thickness of the melt layer of the surfaces of the recessed parts of the grooves and then possible to make the fine grains form nuclei by the following recrystallization annealing treatment and possible to ensure the presence of fine grains at the inside of the glass coating in the surface of the recessed parts of the grooves explained above.

The mechanism of formation of fine grains at the inside of the glass coating in the surface of the recessed parts of the grooves is believed to be as follows. Due to the lasering, the lasered parts of the cold rolled steel sheet (base material steel sheet) melt and form grooves. At the surface parts of the grooves, the crystals grow while oriented in the process of solidification after melting, so columnar crystals are formed from the cold rolled steel sheet (base material) side. The columnar crystals present at the groove surfaces of the cold rolled steel sheet are consumed in large part by the crystal grains recrystallized from the internal structure of the cold rolled steel sheet in the next step of decarburization annealing. On the other hand, an internal oxide layer is formed from the cold rolled steel sheet surface toward the inside layer. The columnar crystals are covered by the oxides which act as barriers, so the oxides function as pins so the crystals become hard to be consumed by the crystal grains recrystallized from inside the steel sheet. As a result, some of the columnar crystals are present inside the internal oxide layer and remain as fine grains without being consumed. In the following secondary recrystallization as well, the internal oxide layer forms a glass coating. The fine grains in the glass coating remain as far as in the final product without being consumed by the Goss orientation growing with priority in the secondary recrystallization.

As explained above, even if considered from the above mechanism of formation of fine grains, it is clear that if the melt layer is thick, the remaining fine grains also become larger in size. Furthermore, if the melt layer becomes too thick, as explained above, many recrystallized grains are formed from inside the melt layer as well and detrimentally affect the secondary recrystallization, specifically, obstruct the priority growth of the Goss orientation, so it is important to control the melt layer thickness.

If satisfying the relation prescribed by dL and dC, the melt layer does not become too thick and the columnar crystals become fine. If fine crystal grains, the distance of formation of oxides from the surface to the inside layer becomes short, recrystallized grains grow from inside the steel sheet, and pinning oxides are formed and easily remain before the columnar crystals of the surface layer are consumed. The fine grains remaining here are not consumed even in the secondary recrystallization of the 1200°C high temperature annealing. This is believed to be because the internal oxide layer transforms to the glass coating in the high temperature annealing, so the oxides continue to have a pinning action and are not consumed.

If satisfying the relation prescribed by dL and dC, the size of the focused spot is not particularly limited, but from the viewpoint of making the remaining recrystallized grains fine, the size of the focused spot is also preferably small. The size of the focused spot may be selected from its relation to other properties of the electrical steel sheet. Practically, the upper limit of dC may be made 300 μm, preferably 250 μm, 200 μm, 150 μm, or 100 μm.

[Assist Gas]

At the same time as the lasering, assist gas may be blown to the portion of the steel sheet where the lasering is performed. The assist gas acts to remove the constituents from the steel sheet melted or evaporated by lasering. By blowing the assist gas, the laser stably reaches the steel sheet, so grooves are stably formed. The flow rate of the assist gas is preferably, for example, made 10 to 1000 liters per minute. Further, the assist gas is preferably air or an inert gas.

<Steps After Forming Grooves>

After forming the grooves in the cold rolled steel sheet, known methods are used to decarburize and nitride the cold rolled steel sheet, then an annealing separator mainly comprised of MgO is coated and is heated and held, then cooled to form a glass coating.

For the decarburization conditions, known conditions can be employed, but for further reduction of the core loss, it is effective to more precisely control the behavior in forming the glass coating. For example, after raising the temperature to 850°C, it is preferable to hold the steel sheet for 60 seconds, then cool it. The decarburization atmosphere is preferably made a hydrogen-inert gas atmosphere with an oxygen potential ($PH_2O/PH_2$) of 0.15 to 0.80 in range. In particular, good properties are obtained in the range of 0.30 to 0.60.

Furthermore, by controlling the conditions of the temperature raising step of the decarburization annealing, it becomes possible to promote the internal oxidation at the columnar crystals of the recessed parts of the grooves at the following decarburization annealing step and stably secure fine grains in the glass coating at the following finish annealing step. For example, in the temperature raising process of the decarburization annealing, the dwell time at 200 to 700°C may preferably be made 50 seconds or less. If the dwell time is 50 seconds or less, in the following soaking process of the decarburization annealing, internal oxidation is promoted, so this is preferable. Further, the oxygen potential ($PH_2O/PH_2$) at the temperature raising process of the decarburization annealing is also preferably 0.80 or less, more preferably 0.60 or less. If 0.80 or less, in the following soaking process of the decarburization annealing, internal oxidation becomes easily promoted, so this is preferable.

The nitriding can also be performed employing known methods. The amount of nitriding can, for example, be made 50 to 400 ppm in range, but if 180 to 250 ppm in range, good properties are obtained.

The glass coating is formed by the step of winding the steel sheet coated with the annealing separator in a coil and holding it at 1150 to 1250°C for 10 to 30 hours (finish annealing), then cooling it. For the composition of the annealing separator, a known one may be employed. For example, it may be made one comprised of MgO: 100 parts by mass and $TiO_2$: 5 parts by mass to which, as an additive, for example, $FeCl_2$ is added to 200 ppm converted as chlorine. For further reduction of the core loss, the moisture release rate from the annealing separator at the finish annealing (room temperature to 700°C) may preferably be 0.5% or more and 6.0% or less. If the moisture release rate is 0.5% or more and 6.0% or less, in the process of temperature rise in the finish annealing, agglomeration of the internal oxide layer to the steel sheet surface side is suppressed and formation of fine grains in the glass coating is promoted.

It is possible to impart tension to the steel sheet even by only the glass coating, but to enhance the effect of control of magnetic domains, it is also possible to form a tension coating (insulating coating) on the glass coating. As the tension coating, for example, it is possible to use one mainly comprised of aluminum phosphate. The thickness may be made about 1 μm.

EXAMPLES

Next, examples of the present invention will be explained. The examples are just illustrations of the present invention. The present invention is not limited to these examples.

<Example 1>

A slab comprised of Si: 3.3 mass%, Mn: 0.10 mass%, S: 0.006 mass%, C: 0.060 mass%, acid soluble Al: 0.027 mass%, and N: 0.008 mass% was hot rolled, annealed as a hot rolled sheet, and cold rolled in that order by known methods to obtain steel sheet with a final sheet thickness of 0.22 mm.

Next, the laser output was adjusted from 1800 to 2000W and the laser scan speed was adjusted from 40 to 60 m/s to laser the surface of the steel sheet to form the laser grooves shown in Table 1. At this time, the focused spot diameter dL of the laser in the rolling direction was adjusted to 3 to 1000 $\mu$m, the focused spot diameter dC of the laser in the sheet width direction was adjusted to 3 to 800 $\mu$m in range, and the aspect ratio (dL/dC) of the focused spot was adjusted as shown in Table 1.

In the grooves formed, the groove angle $\theta$ was made a direction slanted by 0 to 80° with respect to the sheet width direction of the steel sheet in the rolling direction, the groove depth D was made 5 to 50 $\mu$m, the groove pitch P was made 0.4 to 50 mm, and the groove width W was made 10 to 350 $\mu$m.

Further, at the time of lasering, to efficiently remove metal of the steel sheet melted and evaporated by the laser, air is sprayed as assist gas in 100 liters/min.

The cold rolled steel sheet formed with the grooves was decarburized and further was nitrided. The decarburization conditions were raising the temperature to 850°C, then holding for 60 seconds and cooling. The decarburization atmosphere was a hydrogen-nitrogen atmosphere. $PH_2O/PH_2$ was made 0.33. Further, the amount of nitriding was made 200 ppm.

After that, an annealing separator mainly comprised of MgO was coated to 4 g/m$^2$ per surface. The composition of the annealing separator was MgO: 100 parts by mass and $TiO_2$ : 5 parts by mass. $FeCl_2$ was added to 200 ppm converted as chlorine.

Next, the steel sheet coated with the annealing separator was taken up in a coil, held at 1200°C for 20 hours, then cooled to form a glass coating on the surface. Further, a tension coating mainly comprised of aluminum phosphate was formed to a thickness of 1 $\mu$m to obtain grain-oriented electrical steel sheet. The tension at this time was 12 MPa, including the glass coating, with respect to the rolling direction.

The core loss W17/50 after imparting the tension insulating coating (energy loss measured under conditions of 1.7T, 50Hz excitation conditions) was measured. The results are shown in Table 1. It was confirmed that at Nos. B1 to B20 and Nos. b1 to b11, b15, b16, b18, and b19, the magnetic flux densities were all the same extent, while at Nos. B1 to B20, the core losses were good ones of less than 0.750W/kg. At Nos. b12, b13, b14, and b17, secondary recrystallization did not occur, the number of fine grains could not be counted, and the core loss and the magnetic flux density remarkably deteriorated.

<Example 2>

Using the slab described in Example 1, laser grooves shown in Table 2 were formed under the lasering conditions shown in Table 2. Except for the lasering conditions and state of formation of the laser grooves shown in Table 2, a method of production similar to that described in Example 1 was used to produce grain-oriented electrical steel sheet. In each of Nos. C1 to C10 where the crystal orientation of the fine grains at the inside of the glass coating at the surfaces of the recessed parts of the grooves was off from the crystal orientation of the base material by 5° or more, it was confirmed that the core loss was a further improved 0.730W/kg or less.

[Table 1]

(Table 1)

| No. | Laser spot dL/dC ratio | Laser grooves | | | | No of fine grains in groove surface glass coating | Magnetic properties | | Remarks |
|---|---|---|---|---|---|---|---|---|---|
| | | Groove angle θ | Groove width W | Groove depth D | Groove pitch P | | Magnetic flux density B8 | Core loss W17/50 | |
| | | (°) | (μm) | (μm) | (mm) | (No.) | (T) | (W/kg) | |
| B1 | 0.330 | 0 | 50 | 25 | 3.0 | 2 | 1.899 | 0.743 | Ex. |
| B2 | 0.330 | 40 | 50 | 20 | 3.0 | 3 | 1.901 | 0.742 | |
| B3 | 0.330 | 10 | 20 | 18 | 5.0 | 2 | 1.901 | 0.741 | |
| B4 | 0.330 | 15 | 300 | 20 | 5.0 | 5 | 1.902 | 0.741 | |
| B5 | 0.250 | 20 | 30 | 10 | 2.0 | 7 | 1.899 | 0.739 | |
| B6 | 0.330 | 3 | 50 | 40 | 2.0 | 3 | 1.889 | 0.732 | |
| B7 | 0.015 | 5 | 50 | 25 | 1.0 | 9 | 1.888 | 0.741 | |
| B8 | 0.330 | 10 | 50 | 30 | 30.0 | 3 | 1.912 | 0.743 | |
| B9 | 0.330 | 15 | 30 | 22 | 1.5 | 5 | 1.899 | 0.745 | |
| B10 | 0.085 | 10 | 40 | 23 | 1.5 | 2 | 1.900 | 0.742 | |
| B11 | 0.330 | 10 | 50 | 25 | 3.0 | 1 | 1.905 | 0.741 | |
| B12 | 0.330 | 10 | 40 | 20 | 3.0 | 4 | 1.902 | 0.739 | |
| B13 | 0.250 | 10 | 50 | 25 | 3.0 | 2 | 1.902 | 0.741 | |
| B14 | 0.300 | 10 | 50 | 20 | 3.0 | 3 | 1.902 | 0.742 | |
| B15 | 0.012 | 15 | 60 | 25 | 5.0 | 6 | 1.901 | 0.738 | |
| B16 | 0.075 | 5 | 40 | 20 | 5.0 | 1 | 1.899 | 0.748 | |
| B17 | 0.100 | 10 | 40 | 25 | 2.0 | 2 | 1.898 | 0.732 | |
| B18 | 1.000 | 0 | 50 | 20 | 2.0 | 3 | 1.904 | 0.749 | |
| B19 | 1.000 | 10 | 50 | 25 | 4.0 | 2 | 1.902 | 0.748 | |
| B20 | 0.300 | 15 | 40 | 20 | 4.0 | 3 | 1.906 | 0.744 | |

(continued)

| No. | Laser spot dL/dC ratio | Laser grooves | | | | No of fine grains in groove surface glass coating | Magnetic properties | | Remarks |
|---|---|---|---|---|---|---|---|---|---|
| | | Groove angle θ | Groove width W | Groove depth D | Groove pitch P | | Magnetic flux density B8 | Core loss W17/50 | |
| | | (°) | (μm) | (μm) | (mm) | (No.) | (T) | (W/kg) | |
| b1 | 0.330 | 50 | 30 | 20 | 3.0 | 1 | 1.901 | 0.751 | |
| b2 | 0.330 | 80 | 50 | 25 | 3.0 | 3 | 1.905 | 0.755 | |
| b3 | 0.015 | 10 | 10 | 30 | 2.0 | 7 | 1.912 | 0.752 | |
| b4 | 0.015 | 20 | 350 | 20 | 2.0 | 8 | 1.913 | 0.761 | |
| b5 | 0.250 | 15 | 50 | 5 | 1.5 | 2 | 1.906 | 0.758 | |
| b6 | 0.250 | 15 | 50 | 50 | 1.5 | 3 | 1.908 | 0.762 | |
| b7 | 0.085 | 5 | 30 | 18 | 0.4 | 5 | 1.912 | 0.751 | |
| b8 | 0.085 | 10 | 40 | 20 | 50.0 | 6 | 1.905 | 0.755 | |
| b9 | 0.085 | 10 | 40 | 3 | 2.0 | 1 | 1.901 | 0.762 | |
| b10 | 0.250 | 10 | 50 | 6 | 3.0 | 3 | 1.902 | 0.772 | Comp. ex. |
| b11 | 0.214 | 15 | 60 | 8 | 5.0 | 2 | 1.903 | 0.761 | |
| b12 | 0.008 | 5 | 40 | 20 | 5.0 | uncountable | 1.654 | 1.482 | |
| b13 | 0.007 | 10 | 40 | 25 | 2.0 | uncountable | 1.753 | 1.492 | |
| b14 | 0.004 | 0 | 50 | 20 | 2.0 | uncountable | 1.754 | 1.493 | |
| b15 | 1.200 | 10 | 50 | 25 | 4.0 | 0 | 1.888 | 0.782 | |
| b16 | 8.333 | 15 | 40 | 20 | 4.0 | 0 | 1.901 | 0.772 | |
| b17 | 0.007 | 5 | 40 | 20 | 5.0 | uncountable | 1.689 | 1.562 | |
| b18 | 2.250 | 10 | 40 | 25 | 2.0 | 0 | 1.901 | 0.762 | |
| b19 | 1.250 | 0 | 50 | 20 | 2.0 | 0 | 1.905 | 0.782 | |

[Table 2]

(Table 2)

| No. | Laser spot dL/dC ratio | Laser grooves | | | | Fine grains in groove surface glass coating | | Magnetic properties | | Remarks |
|---|---|---|---|---|---|---|---|---|---|---|
| | | Groove angle θ | Groove width W | Groove depth D | Groove pitch P | No. | Difference of crystal orientation | Magnetic flux density B8 | Core loss W17/50 | |
| | | (°) | (μm) | (μm) | (mm) | (No./cross-section) | from base material crystals (°) | (T) | (W/kg) | |
| C1 | 0.33 | 10 | 50 | 20 | 3.0 | 2 | 18 | 1.901 | 0.728 | Ex. |
| C2 | 0.33 | 15 | 50 | 25 | 5.0 | 4 | 23 | 1.902 | 0.729 | |
| C3 | 0.33 | 20 | 40 | 25 | 1.5 | 2 | 35 | 1.905 | 0.730 | |
| C4 | 0.33 | 10 | 40 | 20 | 3.0 | 3 | 36 | 1.899 | 0.728 | |
| C5 | 0.09 | 10 | 30 | 20 | 2.0 | 3 | 42 | 1.898 | 0.729 | |
| C6 | 0.09 | 5 | 30 | 25 | 4.0 | 6 | 15 | 1.902 | 0.730 | |
| C7 | 0.09 | 10 | 50 | 20 | 3.0 | 4 | 10 | 1.904 | 0.728 | |
| C8 | 0.09 | 15 | 50 | 18 | 3.0 | 5 | 21 | 1.902 | 0.726 | |
| C9 | 0.09 | 15 | 40 | 20 | 1.5 | 4 | 58 | 1.901 | 0.721 | |
| C10 | 0.09 | 10 | 40 | 18 | 2.0 | 5 | 46 | 1.902 | 0.722 | |

INDUSTRIAL APPLICABILITY

The present invention can be utilized for example for transformer use winding cores and other industrial equipment utilizing grain-oriented electrical steel sheet.

REFERENCE SIGNS LIST

1: steel sheet
2: groove
θ: groove angle
W: groove width
D: groove depth
P: groove pitch
3: base material
4: fine grains
5: base material
6: glass coating
6': glass coating
7: insulating coating
8: fine grains

**Claims**

1. Grain-oriented electrical steel sheet comprising a base material steel sheet having a plurality of grooves on its surface and a glass coating on the surface of the base material steel sheet, in which grain-oriented electrical steel sheet,

   an angle θ formed by a direction perpendicular to a rolling direction and a sheet thickness direction of the base material steel sheet and a longitudinal direction of the grooves is 40° or less, a width W of the grooves is 20 μm or more and 300 μm or less, a depth D of the grooves is 10 μm or more and 40 μm or less, and a pitch P of the grooves in the rolling direction is 1.0 mm or more and 30.0 mm or less, and
   at an inside of the glass coating at surfaces of recessed parts of the grooves, one or more fine grains of a long axis of 1 μm or more and 20 μm or less are present in a cross-section perpendicular to the longitudinal direction of the grooves.

2. The grain-oriented electrical steel sheet according to claim 1, wherein the crystal orientation of the fine grains differs by 5° or more from a Goss orientation of the crystal orientation of the adjacent base material steel sheet.

3. A method of production of the grain-oriented electrical steel sheet according to claim 1 or 2, which method of production of the grain-oriented electrical steel sheet includes a groove forming step of lasering the surface of the steel sheet to form grooves and, as a condition for lasering, a focused spot diameter dL of the laser in the rolling direction and a focused spot diameter dC in the sheet width direction satisfy formula (1):

$$0.010 \leq dL/dC \leq 1.000 \dots \text{ formula (1)}$$

# Fig. 1

ROLLING
DIRECTION

SHEET
THICKNESS
DIRECTION

SHEET WIDTH
DIRECTION

# Fig. 2

20 μm

Fig. 3

Fig. 4

EP 4 506 471 A1

## INTERNATIONAL SEARCH REPORT

International application No.

**PCT/JP2023/013949**

### A. CLASSIFICATION OF SUBJECT MATTER

*C21D 8/12*(2006.01)i; *C22C 38/00*(2006.01)i; *C22C 38/06*(2006.01)n; *B23K 26/073*(2006.01)i; *B23K 26/364*(2014.01)i; *H01F 1/147*(2006.01)i
FI:    C22C38/00 303U; C21D8/12 D; H01F1/147 183; B23K26/364; B23K26/073; C22C38/06

According to International Patent Classification (IPC) or to both national classification and IPC

### B. FIELDS SEARCHED

Minimum documentation searched (classification system followed by classification symbols)

C21D8/12; C21D9/46; C22C38/00; C22C38/06; B23K26/073; B23K26/364; H01F1/147

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 5-258935 A (NIPPON STEEL CORPORATION) 08 October 1993 (1993-10-08) claims, paragraphs [0006]-[0013], fig. 1-3 | 1-2 |
| A | | 3 |
| A | JP 2012-77380 A (JFE STEEL CORP) 19 April 2012 (2012-04-19) entire text, all drawings | 1-3 |
| A | WO 2019/156127 A1 (NIPPON STEEL CORP) 15 August 2019 (2019-08-15) claims, examples 1-3 | 1-3 |
| A | JP 2018-508647 A (POSCO) 29 March 2018 (2018-03-29) entire text, all drawings | 1-3 |
| A | KR 10-2015-0062034 A (POSCO) 05 June 2015 (2015-06-05) entire text, all drawings | 1-3 |

☐ Further documents are listed in the continuation of Box C.          ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **29 June 2023** | **11 July 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

16

# EP 4 506 471 A1

## INTERNATIONAL SEARCH REPORT
### Information on patent family members

International application No.

**PCT/JP2023/013949**

| Patent document cited in search report | | | Publication date (day/month/year) | Patent family member(s) | | Publication date (day/month/year) |
|---|---|---|---|---|---|---|
| JP | 5-258935 | A | 08 October 1993 | (Family: none) | | |
| JP | 2012-77380 | A | 19 April 2012 | US 2013/0160901 | A1 | |
| | | | | entire text, all drawings | | |
| | | | | WO 2012/032792 | A1 | |
| | | | | EP 2615189 | A1 | |
| | | | | CA 2808774 | A1 | |
| | | | | CN 103097563 | A | |
| | | | | KR 10-2013-0037224 | A | |
| | | | | MX 2013002627 | A | |
| | | | | RU 2509164 | C1 | |
| | | | | BR 112013005450 | A2 | |
| WO | 2019/156127 | A1 | 15 August 2019 | US 2020/0362431 | A1 | |
| | | | | claims, examples 1-3 | | |
| | | | | EP 3751013 | A1 | |
| | | | | KR 10-2020-0103096 | A | |
| | | | | CN 111684086 | A | |
| | | | | BR 112020014925 | A2 | |
| | | | | RU 2748773 | C1 | |
| JP | 2018-508647 | A | 29 March 2018 | US 2018/0010206 | A1 | |
| | | | | entire text, all drawings | | |
| | | | | WO 2016/105053 | A1 | |
| | | | | EP 3239324 | A1 | |
| | | | | KR 10-2016-0078247 | A | |
| | | | | CN 107109511 | A | |
| KR | 10-2015-0062034 | A | 05 June 2015 | (Family: none) | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 62054873 B
- JP 62053579 B
- JP 2003129135 A
- WO 2019156127 A
- WO 2011007771 A